# NEUE EUROPÄISCHE PATENTSCHRIFT

(11) **EP 0 699 634 B2**
(45) Veröffentlichungstag und Bekanntmachung des Hinweises auf die Entscheidung über den Einspruch: **09.07.2003**
(45) Hinweis auf die Patenterteilung: 10.03.1999
(21) Anmeldenummer: 95113621.7
(22) Anmeldetag: 30.08.1995
(51) Int. Cl.: C03B 5/235, C03B 5/04, F27B 3/00

(54) **Industrieofen, insbesondere Glasschmelzofen**
Industrial furnace, particularly a glass-melting furnace
Four industriel, en particulier un four de fusion de verre

(30) Priorität: 30.08.1994 DE 4430802
(43) Veröffentlichungstag der Anmeldung: 06.03.1996
(73) Patentinhaber: Hotwork International GmbH, 97846 Partenstein (DE)
(72) Erfinder: Köster, Jörg, D-97846 Partenstein (DE); Schwarz, Gottfried, D-97846 Partenstein (DE); Schwarzenau, Frank, D-97816 Lohr (DE)
(74) Vertreter: Görg, Klaus, Dipl.-Ing.

(56) Entgegenhaltungen:
- EP-A- 0 306 657
- EP-A- 0 577 881
- EP-A- 0 655 581
- EP-A1- 0 513 414
- DE-A- 4 222 863
- DE-A1- 2 403 452
- DE-A1- 3 306 892
- DE-C2- 4 218 702
- US-A- 5 147 438

## Beschreibung

Die Erfindung betrifft einen Industrieofen, insbesondere Glasschmelzofen.

Bei derartigen Industrieöfen wird einer Schmelzwanne, die von Ofenwänden und einem Gewölbe begrenzt ist, über mindestens einen Brennluftkanal, der auch als Brennerport bezeichnet wird, separat Verbrennungsluft und gasförmiger und/oder flüssiger Brennstoff bzw. auch in gemischter Form zugeführt. Die Verbrennungsluftzufuhr erfolgt über Luftkanäle, wobei in der Regel eine Verbrennungsluftvorwärmung beispielsweise mittels sogenannter Regenerativkammern erfolgt. In jedem Brennermaul des Ofens ist mindestens eine Brennerlanze vorgesehen, aus der im Betrieb Brennstoff mit einer bestimmten Austrittsgeschwindigkeit ausströmt. Durch diese Brennstoffeindüsung in den vorgeheizten Verbrennungsluftstrom kommt es zu einer Brennstoff-Verbrennungsluft-Gemischbildung und zur Ausbildung einer Flamme zur Beheizung des Ofens.

Je nach Ofengeometrie ist die Schmelzwanne z.B. als U-Flammenwanne oder als Querflammenwanne ausgebildet. Bei einer U-Flammenwanne ergibt sich für die aus dem Brennermaul austretende Strömung des Brennstoff-Verbrennungsluft-Gemisches, das dann in einer länglichen Flamme verbrennt, ein im wesentlichen U-förmiger Verlauf hin zu einem zweiten Brennermaul, das der Abgasabführung dient. Im Falle eines Glasschmelzofens bildet sich der U-förmige Verlauf der Flammen- und Abgasströmung über einer in der Schmelzwanne befindlichen Glasschmelze aus, um diese zu schmelzen. Dabei erfolgt normalerweise ein zyklischer Feuerwechsel zwischen den beiden Brennermäulern einer U-Flammenwanne, d.h. es dient wechselweise das eine Brennermaul der Zufuhr von Verbrennungsluft und Brennstoff und das andere Brennermaul im abgeschalteten Zustand der Abgasabführung. Bei Glasschmelzöfen erfolgt eine Umschaltung der Befeuerungsrichtung beispielsweise alle 20 bis 30 min. Bei einer Querflammenwanne ergibt sich eine im wesentlichen geradlinige Flammen- und Abgasströmung z.B. über einer Glasschmelze von einem zuführenden Brennermaul zu einem gegenüberliegenden abführenden Brennermaul. Häufig sind dabei mehrere Brennermaulpaare nebeneinander angeordnet. Auch hier findet normalerweise ein zyklischer Feuerwechsel von den auf der einen Seite der Schmelzwanne angeordneten Brennermäulern auf die gegenüberliegenden Brennermäuler statt, wobei sich dann die Strömungsrichtung im Ofen umkehrt.

Die Positionierung der Brennerlanze bzw. mehrerer Brennerlanzen in einem Brennermaul erfolgt normalerweise in einer sogenannten Underport-, Sideportoder Throughport-Anordnung. Bei der Underport-Anordnung befinden sich die Brennerlanzen im Brennermaul in einem Bereich unterhalb des Verbrennungsluftkanals. Dabei ist jede Brennerlanze in einen sogenannten Düsenstein eingesetzt und in einem veränderbaren Basis-Winkel zur generellen Strömungsrichtung der Verbrennungsluft angeordnet. Bei der Sideport-Anordnung sind die Gasbrennerlanzen seitlich im Brennermaul unter einem veränderbaren Basis-Winkel zur Strömungsrichtung der Verbrennungsluft ebenfalls in Düsensteine eingesetzt. Bei der Throughport-Anordnung ragt mindestens eine Gasbrennerlanze im Brennermaul in den Verbrennungsluftkanal hinein und' wird während der Brennstoffeindüsung von der vorgeheizten Verbrennungsluft umströmt. Deshalb ist für eine derart angeordnete Brennerlanze z.B. eine Wasserkühlung vorgesehen. Diese kann in der Feuerpause ausgefahren werden.

Ein Problem bei derartigen Industrieöfen und insbesondere bei Glasschmelzöfen ist die Verringerung der NOₓ-Bildung bei der Verbrennung. Ein Lösungsansatz hierzu ist beispielsweise die sogenannte Luftstufung der Verbrennungsluft, d.h., die Verbrennungsluft wird z.B. einer U-Flammenwanne nicht nur über einen Luftkanal durch ein Brennermaul zugeführt, sondern auch über weitere in Strömungsrichtung hinter dem Brennermaul in den seitlichen Ofenwänden angeordnete Luftzufuhröffnungen. Ein weiterer Lösungsansatz zur NOₓ-Verringerung besteht in der sogenannten Brennstoffstufung. Beide Vorgehensweisen sind jedoch konstruktiv sehr aufwendig und damit nur mit entsprechend hohen Kosten in einem Industrieofen zu verwirklichen, und können in hohem Maße dem Feuerfestmaterial schaden.

Aus der US 5 147 438 ist ein Glasschmelzofen bekannt, der im Cross-Fire-Betrieb betrieben wird. Hierbei sind die Brennermäuler jeweils symmetrisch mit Brennerlanzen bestückt.

Ferner ist aus der EP-A-0 577 881 ein Glasschmelzofen bekannt, bei dem die Brenner in zwei Ebenen angeordnet sind. Dabei ist in der einen Ebene seitlich im Brennerhals ein Brenner zur Beeinflussung der im Brennermaul symmetrisch angeordneten Brennerlanzen der Hauptfeuerung vorgesehen.

Weiterhin ist aus der DE-A-42 22 863 eine regenerative Schmelzwanne mit reduziertem NOₓ-Ausstoß bekannt. Hierbei sind die Brennstoffzuführdüsen in den Seitenwänden, im Boden und der Decke des Brennerhalses angeordnet.

Schließlich ist aus der EP 0 306 657 ein Glasschmelzofen mit einer U-Flammenwanne bekannt.

Der Erfindung liegt das technische Problem (Aufgabe) zugrunde, einen Industrieofen, insbesondere Glasschmelzofen, zu schaffen, bei dem bei guter Ofenleistung die NOₓ-Bildung gering gehalten wird.

Dieses Problem wird erfindungsgemäß mit einem Industrieofen, insbesondere Glasschmelzofen, mit den Merkmalen des Patentanspruchs 1 gelöst.

Während bei herkömmlichen Brennermäulern die Brennerlanzen symmetrisch über die Breitenabmessung des Brennermauls verteilt angeordnet sind, ist erfindungsgemäß eine asymmetrische Anordnung der Brennerlanze bzw. der Brennerlanzen über die Breitenabmessung des Brennermauls vorgesehen. Mit anderen Worten ist bei der erfindungsgemäßen asymmetrischen Brennerlanzenpositionierung in einem Brennermaul keine Symmetrie der darin angeordneten Brennerlanzen zur vertikalen Mittelebene des Brennermauls mehr gegeben. Dabei können erfindungsgemäß beispielsweise die Abstände zwischen den einzelnen Brennerlanzen untereinander jeweils gleich sein, wobei aber dann die beabstandeten Brennerlanzen insgesamt aus ihrer symmetrischen Position im Brennermaul zu einer Seite des Brennermauls hin verschoben sind. Die Asymmetrie der Brennerlanzenanordnung kann aber auch derart realisiert sein, daß jeweils unterschiedliche Abstände sowohl zwischen den Brennerlanzen als auch von den äußeren Brennerlanzen zu den seitlichen Begrenzungen des Brennerports vorliegen.

Hierbei beträgt der Abstand zwischen einer Seitenwand, im Fall einer U-Flammenwanne einer äußeren Seitenwand, des Brennermauls und der Brennerlanzenanordnung weniger als 45% der Brennermaulbreite, Vorzugsweise beträgt dieser Abstand mehr als 30% der Brennermaulbreite. Mit einem derartigen Wert der "Asymmetrie" lassen sich besonders gute Ergebnisse erzielen.

Mit dieser erfindungsgemäßen Brennerlanzenpositionierung lassen sich z.B. bei Glas- oder Basaltschmelzöfen bei vergleichbaren Schmelzleistungen erheblich reduzierte Werte an NOₓ-Bildung erreichen. Die asymmetrische Positionierung der Brennerlanzen hängt dabei von der Anzahl der Brennerlanzen je Brennermaul, der maximalen Brennstoffmenge je Brennerlanze und der effektiven Verbrennungslufteinströmung zur Schmelzwanne entsprechend der Brennermaulgestaltung ab. Bei Glasschmelzöfen resultiert aus der konstruktiv bei der Ofengestaltung berücksichtigten asymmetrischen Brennerlanzenanordnung bei Nutzung sachgerechter Brennertechnik eine sehr schmelzintensive Flammenführung mit optimaler Temperaturangleichung zwischen dem Schmelz- und Läuterteil der Schmelzwanne bei gleichzeitiger Minderung der NOₓ-Bildung über dem gesamten Flammenbereich.

Bei einem gemäß der Erfindung ausgeführten Industrieofen strömt die Verbrennungsluft, die aus dem Brennermaul austritt, an den Stellen, wo durch die asymmetrische Brennerlanzenanordnung größere freie Zwischenräume über die Breitenabmessung des Brennermauls vorgesehen sind, eine längere Wegstrecke in den Ofenraum, bis sich dieser Luftanteil aktiv mit dem Brennstoff vermischt und der darin enthaltene Sauerstoff in die Verbrennungsreaktion einbezogen wird. Es ergibt sich also eine räumliche Gliederung des Verbrennungsvorgangs in Richtung der Einströmung in den Ofen. Im Bereich der Brennerlanzen wird dabei mit unterstöchiometrischer Luftzufuhr gearbeitet, was sich mindernd auf die NOₓ-Bildung auswirkt, wobei jedoch die insgesamt zugeführte Verbrennungsluftmenge im Verhältnis zur Brennstoffmenge einen gewissen Luftüberschuß aufweisen sollte, damit die CO-Werte im Abgas minimiert werden.

Die erfindungsgemäße asymmetrische Brennerlanzenanordnung über die Breitenabmessung des Brennermauls wird vorzugsweise bei Industrieöfen verwendet, deren Schmelzwanne als U-Flammenwanne, Querflammenwanne oder Floatwanne ausgebildet ist.

Bei einem Industrieofen nach Anspruch 3, der mit einer U-Flammenwanne und zwei Brennermäulern ausgestattet ist, die beidseits einer vertikalen Mittelebene der U-Flammenwanne an einer gleichen Ofenwand angeordnet sind, ist vorzugsweise die mindestens eine Brennerlanze jedes Brennermauls aus ihrer über die Breitenabmessung des Brennermauls symmetrisch verteilten Anordnung in Richtung von der Mittelebene der U-Flammenwanne weg versetzt. Die Brennstoffeindüsung ist also im Vergleich zu einem herkömmlichen Ofen mit U-förmigem Flammen- und Abgasverlauf weiter zum Außenumfang dieses Verlaufs hin konzentriert.

Erfindungsgemäß ist für die asymmetrische Brennerlanzenanordnung im Brennermaul vorzugsweise eine Underport- oder Throughport-Anordnung vorgesehen.

Gemäß der Erfindung ist es günstig, die mindestens eine Brennerlanze je Brennermaul mit einer Regeleinrichtung zur Veränderung des Austrittsgeschwindigkeitsprofils des flüssigen, z.B. ölförmigen und/oder gasförmigen Brennstoffs über den Austrittsquerschnitt der Brennerlanze zu versehen. Vorzugsweise umfaßt eine derartige Regeleinrichtung z.B. bei gasförmigem Brennstoff der Gasbrennerlanze einen Mehrfachdüsenkopf.

Bei einer Kombination der asymmetrischen Brennerlanzenanordnung über die Breitenabmessung des Brennermauls mit Brennerlanzen, die hinsichtlich des Querschnittsprofils der Brennstoffaustrittsgeschwindigkeiten regelbar sind, ergibt sich der Vorteil, daß z.B. anstelle von drei Brennerlanzen je Brennermaul in einem herkömmlichen Ofen nunmehr zwei Brennerlanzen je Brennermaul für eine vergleichbare Ofenleistung, z.B. der Schmelzleistung eines Glasschmelzofens, ausreichen. Durch die Reduzierung von drei auf zwei Brennerlanzen je Brennermaul wird die gesamte Brennstoffmenge auf diese beiden Brennerlanzen konzentriert. Damit sich nicht automatisch der Ausbrandweg, d.h. die Flammenlänge vergrößert, wird mittels der regelbaren Brennerlanzen das Austrittsgeschwindigkeitsprofil des Brennstoffs der einzelnen Brennerlanzen bei jeweils gleichem Brennstoffdurchsatz zurückgeregelt, um dadurch die Flammenlänge ebenfalls zurückzunehmen.

Weiterhin ist es erfindungsgemäß günstig, die Breiten- und Höhenabmessungen des Brennermauls im Vergleich zu herkömmlichen Gestaltungen derart abzuwandeln, daß ein flacheres und breiteres Brennermaul entsteht. Damit können in vorteilhafter Weise die Asymmetrie der Brennerlanzenanordnung und die Breite des Flammenbandes so ausbalanciert werden, daß ein Maximum an NOₓ-Minderung bei höchster Schmelzleistung erreicht wird.

Zuvor wurde als eine Ausführung der Erfindung eine asymmetrische Brennerlanzenanordnung für U-Flammenwannen beschrieben, bei der die Brennerlanzen aus ihrer symmetrisch verteilten Anordnung von der vertikalen Mittelebene der U-Flammenwanne weg versetzt sind. Dies kann z.B. dadurch erfolgen, daß anstelle von beispielsweise drei in herkömmlicher Weise symmetrisch über die Breitenabmessung des Brennermauls verteilten Brennerlanzen nur die beiden bezüglich des U-förmigen Flammen- und Abgasströmungsverlaufs äußeren Brennerlanzen im Brennermaul vorgesehen sind. Ebenso ist es aber möglich, anstelle von z.B. drei symmetrisch verteilten Brennerlanzen nur die beiden bezüglich des U-förmigen Strömungsverlaufs innenliegenden Brennerlanzen in einer asymmetrischen Anordnung vorzusehen. Im Vergleich zur bevorzugten Ausführungsform mit zwei bezüglich des U-förmigen Strömungsverlaufs außenliegenden Brennerlanzen wird hierbei jedoch die NOₓ-Minderung in der Regel etwas niedriger ausfallen.

Entsprechend der beispielhaft beschriebenen Reduzierung der Brennerlanzenanzahl je Brennermaul von drei auf zwei Lanzen kann auch eine Verringerung der Brennerlanzenanzahl bei einer höheren oder geringeren Anzahl von in herkömmlicher Weise symmetrisch verteilten Brennerlanzen vorgenommen werden, z.B. von vier auf drei oder von sechs auf vier. Die Lanzenanzahl, und somit auch eine mögliche Verringerung dieser Anzahl gegenüber herkömmlichen Ofenkonstruktionen, hängt von Einflußgrößen wie der Ofengröße, der Schmelzleistung und dem Brennstoffverbrauch ab und muß im Einzelfall festgelegt werden. Hierbei spielt auch die Festlegung der Abstände zwischen den einzelnen Brennerlanzen eine wichtige Rolle.

Insbesondere bei einer Kombination der asymmetrischen Brennerlanzenanordnung im Brennermaul mit der Verwendung von regelbaren Gasbrennerlanzen und einer flacheren und breiteren Brennermaulgestaltung läßt sich z.B. im Vergleich zu einem herkömmlichen Glasschmelzofen die geforderte Schmelzleistung mit dem gleichen oder sogar einem verringerten Energieeinsatz realisieren, wobei aber die NOₓ-Bildung erheblich vermindert ist.

Nachfolgend wird die Erfindung an einem Ausführungsbeispiel mit Bezug auf die beigefügten Zeichnungen näher erläutert.

Es zeigen:
- Fig. 1: eine schematisierte Draufsicht auf eine U-Flammenwanne gemäß einem ersten Ausführungsbeispiel eines erfindungsgemäßen Glasschmelzofens mit zwei Brennerports (Brennerlanzen nur für einen Brennerport schematisiert dargestellt);
- Fig. 2: einen Ausschnitt einer schematisierten Längsschnittsansicht eines Brennerports des Glasschmelzofens in Fig. 1;
- Fig. 3: eine schematisierte Seitenansicht eines Brennerports für eine U-Flammenwanne gemäß einem zweiten Ausführungsbeispiel eines erfindungsgemäßen Glasschmelzofens;

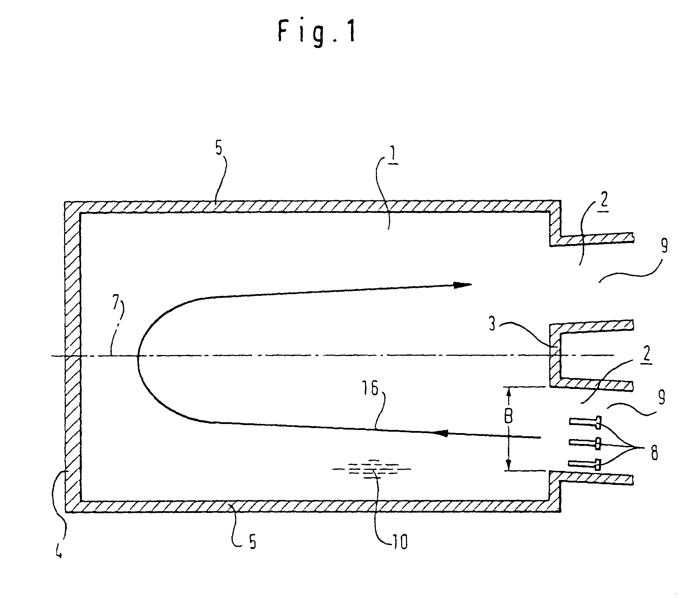

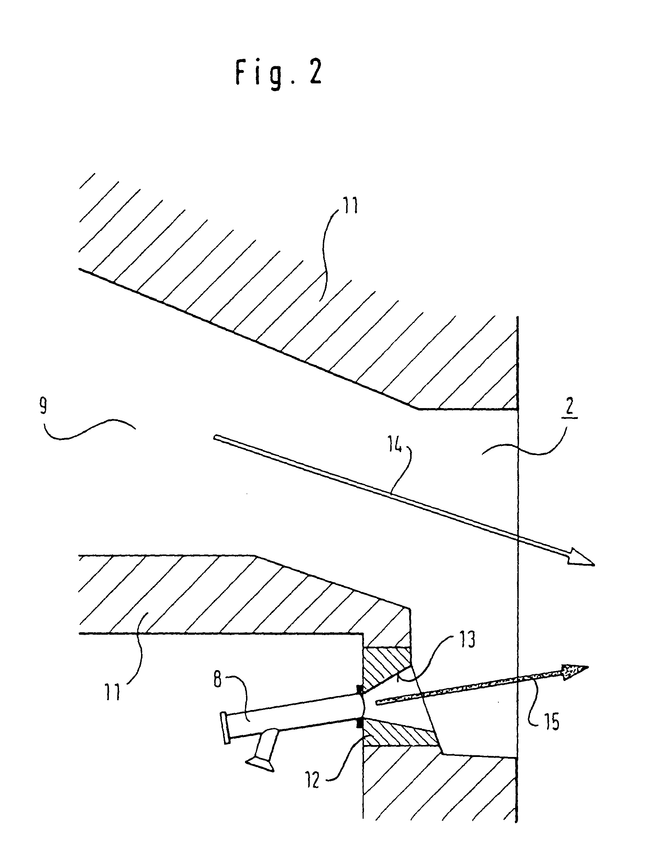

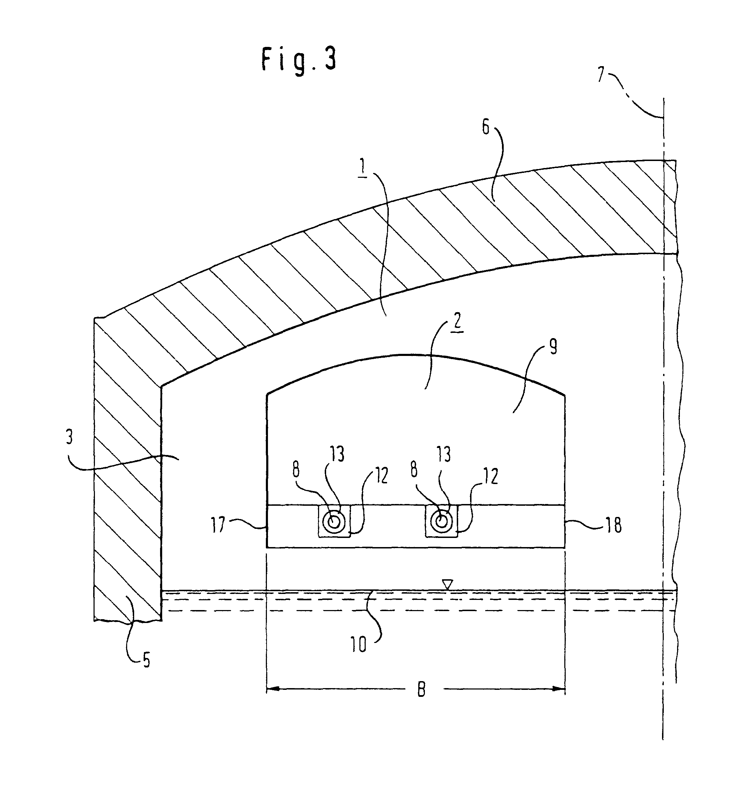

In Fig. 1 ist eine U-Flammenwanne 1 eines Glasschmelzofens dargestellt, die von einer Vorderwand 3, zwei Seitenwänden 5 und einer Rückwand 4 begrenzt wird. Der Ofenraum wird außerdem von einer Decke 6 (vgl. Fig. 3) und einem nicht dargestellten Boden begrenzt. In der Vorderwand 3 sind zwei Brennerports 2 ausgebildet, die symmetrisch zu einer vertikalen Mittelebene 7 der U-Flammenwanne angeordnet sind. In dem in der Zeichnung unteren Brennerport 2 sind drei Brennerlanzen 8 angeordnet. Spiegelsymmetrisch zur Mittelebene 7 sind ebenfalls drei Brennerlanzen im in der Zeichnung oberen Brennerport 2 angeordnet, die jedoch in Fig. 1 nicht dargestellt wurden. Zur besseren Übersicht wurden in Fig. 1 ferner die Düsensteine weggelassen und ebenso die oberen und unteren Begrenzungswände eines Luftkanals 9, der in den Brennerport 2 einmündet. Die Brennerlanzen 8 sind in einer sogenannten Underport-Anordnung plaziert, die später mit Bezug auf Fig. 2 noch näher erläutert wird.

In der U-Flammenwanne befindet sich eine Glasschmelze 10, deren Flüssigkeitsspiegel unterhalb der Brennerports 2 liegt (vgl. Fig. 3).

Wie in Fig. 1 zu sehen, sind die drei Brennerlanzen 8 des Brennerports 2 nicht symmetrisch über die Breitenabmessung B des Brennerports verteilt, sondern sie sind von der Mittelebene 7 weg zur in der Zeichnung unteren Seitenwand 5 hin verschoben. Die drei Brennerlanzen sind also bezüglich einer vertikalen Mittelebene des Brennerports 2 nicht symmetrisch angeordnet. Somit liegt eine asymmetrische Brennerlanzenanordnung bezüglich der Breitenabmessung B des Brennerports 2 vor. Im Ausführungsbeispiel sind die Abstände zwischen den drei Brennerlanzen 8 gleich groß gewählt, können aber auch ungleich sein.

Fig. 2 zeigt die Underport-Anordnung der Brennerlanzen 8 im Glasschmelzofen gemäß Fig. 1. Im Brennerport 2, der auch als Brennermaul bezeichnet wird, endet im oberen Bereich ein Luftkanal 9, der durch gemauerte Wände 11 begrenzt ist. Im unteren Bereich des Brennerports 2 sind Düsensteine 12 angeordnet, die in ihrem Inneren jeweils eine düsenförmige Durchgangsöffnung 13 ausbilden. In jeden Düsenstein 12 ist eine Brennerlanze 8, die im Düsenstein kugelig abdichtet, eingesetzt, die in Fig. 2 lediglich schematisch dargestellt ist.

Die Brennerlanzen 8 sind bei den vorwiegend gasbefeuerten Anlagen als Lanzen mit Mehrfachdüsenkopf ausgeführt, bei denen der Brenngasstrom in mehrere Teilströme zerlegt werden kann und die einzelnen Teilströme hinsichtlich ihrer Austrittsgeschwindigkeiten bei gleichbleibendem Brennstoffdurchsatz regelbar sind. Eine Regelung des Gasaustrittsgeschwindigkeitsprofils über den Austrittsquerschnitt der Gasbrennerlanze kann anstatt über einen Mehrfachdüsenkopf beispielsweise auch über Ventilkfappen erfolgen.

Wie in Fig. 2 gezeigt, sind der Luftkanal 9 zur Verbrennungsluftzufuhr und die Brennerlanzen 8 zur Brennstoffeindüsung in einem spitzen Winkel zueinander angeordnet. Der Pfeil 14 veranschaulicht die generelle Strömungsrichtung der Verbrennungsluft, während der Pfeil 15 die generelle Strömungsrichtung des gasförmigen Brennstoffs oder des zerstäubten Ölbrennstoffes zeigt.

Nachfolgend wird nun die Funktion des in den Fig. 1 und 2 gezeigten Ausführungsbeispiels eines erfindungsgemäßen Glasschmelzofens näher erläutert:

Die Befeuerung des Ofens erfolgt bei der in Fig. 1 gezeigten Situation über den in der Zeichnung unteren Brennerport 2, während der in der Zeichnung obere Brennerport 2 der Abgasabführung dient. In einem zyklischen Wechsel erfolgt eine Umschaltung der Brennerports und damit eine Umschaltung der Befeuerungsrichtung des Ofens.

Wie in Fig. 2 zu sehen, strömt vorgeheizte Verbrennungsluft durch den Luftkanal 9 über den Brennerport 2 in den Ofenraum ein. Der Brennstoff wird separat über die unterhalb des Luftkanals 9 angeordneten Brennerlanzen 8 über den Brennerport 2 in den Ofenraum eingedüst. Dabei kommt es zu einer Vermischung der Verbrennungsluft mit dem Brennstoff und zur Ausbildung einer Flamme mit einem im wesentlichen U-förmigen Verlauf über der Glasschmelze 10. Dieser U-förmige Verlauf der Flamme und der Abgasströmung ist in Fig. 1 durch eine schematisierte Stromlinie 16 veranschaulicht.

Durch die asymmetrische Plazierung der drei Brennerlanzen 8 im Brennerport 2 wird beispielsweise im Vergleich zu einer herkömmlichen Brennerlanzenanordnung mit vier symmetrisch über die Breite des Brennerports 2 verteilten Lanzen eine deutliche Reduzierung der NOₓ-Bildung erreicht, wobei durch die drei asymmetrisch positionierten Brennerlanzen 8 die gleiche Brennstoffgesamtmenge durchgesetzt wird wie durch die vier herkömmlich vorgesehenen Brennerlanzen. Im Ausführungsbeispiel liegt ein vergleichsweise großer Abstand zwischen der näher an der Mittelebene 7 gelegenen seitlichen Begrenzungswand des Brennerports 2 und der der Mittelebene 7 nächstgelegenen Brennerlanze 8 vor. In diesem Bereich des Luftkanals 9 kann daher die einströmende Verbrennungsluft relativ weit in den Ofenraum der U-Flammenwanne 1 einströmen, bevor der in dieser Verbrennungsluft enthaltene Sauerstoff tatsächlich an der Verbrennung teilnimmt. Dadurch ergibt sich also eine entlang der Stromlinien 16 gestaffelte Verbrennungsluftzufuhr. Daraus resultiert eine deutliche Verringerung der NOₓ-Bildung im Glasschmelzofen.

Ein zweites Ausführungsbeispiel eines erfindungsgemäßen Glasschmelzofens ist in Fig. 3 gezeigt. Entsprechende Bauteile sind mit den gleichen Bezugszeichen wie in den Fig. 1 und 2 versehen, so daß hinsichtlich dieser Komponenten auf die vorangehende Beschreibung verwiesen wird. Der Glasschmelzofen ist mit einer U-Flammenwanne 1 versehen, die symmetrisch zur vertikalen Mittelebene 7 ausgebildet ist, wobei in der Zeichnung die rechte Hälfte nicht dargestellt ist.

Im Brennerport 2 sind zwei Brennerlanzen 8 über die Breitenabmessung B des Brennerports asymmetrisch verteilt angeordnet. Wie aus Fig. 3 ersichtlich ist, liegen im Beispiel drei verschiedene Abstände zwischen einer äußeren Begrenzungswand 17 des Brennerports 2 und der äußeren Brennerlanze 8, zwischen den beiden Brennerlanzen 8 und zwischen der inneren Brennerlanze 8 und einer inneren Begrenzungswand 18 des Brennerports vor. Aus einer Anordnung der Brennerlanzen 8, die bezüglich einer vertikalen Mittelebene des Brennerports 2 symmetrisch wäre, ist zumindest die innere Brennerlanze 8 in der Zeichnung nach links, d.h. von der Mittelebene 7 der U-Flammenwanne weg versetzt. Die Funktion dieses zweiten Ausführungsbeispiels entspricht vom Grundprinzip her der Funktionsweise, wie sie im Zusammenhang mit dem ersten Ausführungsbeispiel gemäß den Fig. 1 und 2 erläutert wurde.

Die Figuren 1 bis 3 gelten im Prinzip auch für Querflammen/Floatwannen.

## Patentansprüche

1. Industrieofen, insbesondere Glasschmelzofen, mit
- einer durch Ofenwände (3, 4, 5, 6) begrenzten Schmelzwanne (1);
- mindestens einem in einer Ofenwand (3) angeordneten und sich zur Schmelzwanne (1) hin öffnenden Brennermaul (2) zur separaten Zufuhr von Verbrennungsluft und Brennstoff,
- einem Luftkanal (9), der zur Verbrennungsluftzufuhr in das Brennermaul (2) einmündet, und
- mindestens einer Brennerlanze (8), die in dem Brennermaul (2) zur Brennstoffzufuhr vorgesehen ist,
**dadurch gekennzeichnet, daß**
- der Abstand zwischen einer Seitenwand (17), im Fall einer U-Flammenwanne einer äußeren Seitenwand (17), des Brennermauls (2) und der Brennerlanzenanordnung weniger als 45% der Brennermaulbreite (B) beträgt.

2. Industrieofen nach Anspruch 1,
**dadurch gekennzeichnet, daß**
der Abstand zwischen der Seitenwand (17) des Brennermauls (2) und der Brennerlanzenanordnung mehr als 30% der Brennermaulbreite (B) beträgt.

3. Industrieofen nach Anspruch 1 oder 2,
**gekennzeichnet durch**
- die Ausführung der Schmelzwanne als eine U-Flammenwanne (1), und
- zwei Brennermäuler (2), die beidseits einer vertikalen Mittelebene (7) der U-Flammenwanne an der gleichen Ofenwand (3) angeordnet sind und sich zur Flammenwanne (1) hin öffnen.

4. Industrieofen nach Anspruch 1, 2 oder 3, **dadurch gekennzeichnet, daß** die Brennerlanze (8) mit einer Regeleinrichtung zur Veränderung des Austrittsgeschwindigkeitsprofils des Brennstoffs über den Austrittsquerschnitt der Brennerlanze ausgestattet ist.

5. Industrieofen nach einem der Ansprüche 1 bis 4, **dadurch gekennzeichnet, daß** Regeleinrichtung der Brennerlanze (8) einen Mehrfachdüsenkopf umfaßt.

6. Industrieofen nach einem der vorstehenden Ansprüche, **dadurch gekennzeichnet, daß** die mindestens eine Brennerlanze (8) im Brennermaul (2) in einer Underportoder Throughport-Anordnung vorgesehen ist.

## Claims

1. Industrial furnace, in particular a glass-melting furnace, having
- a melting tank (1) bounded by furnace walls (3, 4, 5, 6),
- at least one burner mouth (2) arranged in a furnace wall (3) and opening towards the melting tank (1) for the separate supply of combustion air and fuel,
- an air channel (9) which discharges into the burner mouth (2) for the supply of combustion air, and
- at least one burner lance (8) which is provided in the burner mouth (2) for the supply of fuel,
**characterised in that**
- the distance between a side wall (17), an outer side wall (17) in the case of a horseshoe flame tank, of the burner mouth (2) and the burner lance arrangement is less than 45% of the burner lance width (B).

2. Industrial furnace according to Claim 1, **characterised in that** the distance between the side wall (17) of the burner mouth (2) and the burner lance arrangement is more than 50% of the burner mouth width (B).

3. Industrial furnace according to Claim 1 or 2,
**characterised by**
the construction of the melting tank as a horseshoe flame tank (1), and
two burner mouths (2) which are arranged on the same furnace wall (3) on both sides of a central vertical plane (7) and open towards the flame tank (1).

4. Industrial furnace according to Claim 1, 2 or 3,
**characterised in that** the burner lance (8) is equipped with a control device for altering the discharge velocity profile of the fuel across the discharge cross-section of the burner lance.

5. Industrial furnace according to one of Claims 1 to 4, **characterised in that** the control device of the burner lance (8) comprises a multiple nozzle head.

6. Industrial furnace according to one of the preceding claims, **characterised in that** the at least single burner lance (8) in the burner mouth (2) is provided in an underport or throughport arrangement.

## Revendications

1. Four industriel, en particulier four pour la fusion du verre, comportant
- une cuve de fusion (1) délimitée par des parois de four (3, 4, 5, 6);
- au moins un gueulard de brûleur (2), disposé dans une paroi de four (3) et débouchant vers la cuve de fusion (1), afin d'amener séparément de l'air de combustion et du combustible,
- un canal à air (9) débouchant dans le gueulard de brûleur (2), pour assurer l'amenée d'air de combustion, et
- au moins une lance de brûleur (8), prévue dans le gueulard de brûleur (2) pour assurer l'apport en combustible,
**caractérisé en ce que**,
- l'espacement entre une paroi latérale dans le cas d'une cuve à flamme en U alors une paroi latérale extérieure (17) du gueulard de brûleur (2) et la lance de brûleur (8) est inférieure à 45% de la largeur (B) du gueulard de brûleur.

2. Four industriel selon la revendication 1, **caractérisé en ce que** l'espacement entre la paroi latérale (17) du gueulard de brûleur (2) et l'agencement de lance de brûleur est supérieure à 30% de la largeur (b) du gueulard de brûleur.

3. Four industriel selon la revendication 1 ou 2, **caractérisé par**
- la réalisation de la cuve de fusion sous la forme d'une cuve à flamme en U (1), et
- le fait de comprendre deux gueulards de brûleur (2), disposés des deux côtés d'un plan médian vertical (7) de la cuve à flamme en U sur la même paroi de four (3) et débouchant vers la cuve à flamme (1).

4. Four industriel selon la revendication 1, 2 ou 3, **caractérisé en ce que** la lance de brûleur (8) est équipée d'un dispositif de régulation permettant de moduler le profil de la vitesse de sortie du carburant sur la section transversale de sortie de la lance de brûleur.

5. Four industriel selon l'une des revendications 1 à 4, **caractérisé en ce que** le dispositif de régulation de la lance de brûleur (8) comprend une tête à buses multiples.

6. Four industriel selon l'une des revendications précédentes, **caractérisé en ce que** la au moins une lance de brûleur (8) est prévue dans le gueulard de brûleur (2) en un agencement underport ou throughport.
